# EUROPEAN PATENT APPLICATION

(11) **EP 0 783 986 A2**
(43) Date of publication of application: **16.07.1997**
(21) Application number: 96201993.1
(22) Date of filing: 15.07.1996
(51) Int. Cl.: B60G 21/055

(54) **Vehicle roll control system**

(30) Priority: 24.08.1995 GB 9517359
(71) Applicant: Delphi France Automotive Systems, 92257 La Garenne-Colombes (FR)
(72) Inventor: Germain, Philippe, 93100 Montreuil (FR); Burke, David, 95270 Belloy en France (FR)
(74) Representative: Denton, Michael John

(57) **Abstract**

A vehicle roll control system (22,24) for a vehicle (10) having a pair of wheels (12,16) each rotatable on an axle (14,18), comprising a torsion bar (26); a first arm (28) extending substantially perpendicular to the torsion bar, the first arm being fixed to the torsion bar at one end and being connectable to one of the axles at the other end; a second arm (30) extending substantially perpendicular to the torsion bar, the second arm being rotatably mounted on the torsion bar at one end and being connectable to the other axle at the other end; and rotation control means (32,34) connected between the second arm and the torsion bar, the rotation control means being actuable on detection of a predetermined vehicle condition to variably control the rotation of the second arm relative to the torsion bar.

## Description

The present invention relates to a roll control system for a motor vehicle.

GB-A-2,230,237 discloses a roll control system comprising a torsion bar, a first arm fixedly connected to one end of the torsion bar, and a second arm rotatably connected to the other end of the torsion bar by way of a rotary actuator. The rotary actuator is operable to effect relative angular movement between the second arm and the said other end of the torsion bar. This arrangement is such that the actuator has to generate a large amount of force in order to provide the required roll control.

GB-A-2284184 describes a roll control system in which a hydraulic cylinder is used to prevent or allow rotation of an arm attached to a torsion bar between the torsion bar and an axle of a wheel. This arrangement provides a limited amount of roll control.

The aim of the present invention is to provide a roll control system which is an improvement to the above mentioned arrangements.

To this end, a vehicle roll control system in accordance with the present invention for a vehicle having a pair of wheels each rotatable on an axle, comprises a torsion bar; a first arm extending substantially perpendicular to the torsion bar, the first arm being fixed to the torsion bar at one end and being connectable to one of the axles at the other end; a second arm extending substantially perpendicular to the torsion bar, the second arm being rotatably mounted on the torsion bar at one end and being connectable to the other axle at the other end; and rotation control means connected to the torsion bar and to the second arm between its ends, the rotation control means being actuable on detection of a predetermined vehicle condition to variably control the rotation of the second arm relative to the torsion bar.

The present invention will now be described by way of example, with reference to the accompanying drawings, in which:-
Figure 1 is a schematic presentation of a vehicle incorporating a vehicle roll control system in accordance with the present invention;
Figure 2 is an enlarged view of the front and rear portions of the vehicle roll control system shown in Figure 1;
Figure 3 is a side view of the first arm of the vehicle roll control system shown in Figure 2;
Figure 4 is a side view of the second arm, hydraulic actuator (shown in cross-section) and lever arm of the vehicle roll control system shown in Figure 2; and
Figure 5 is a schematic diagram of the hydraulic and electrical control circuit of the vehicle roll control system shown in Figure 1.

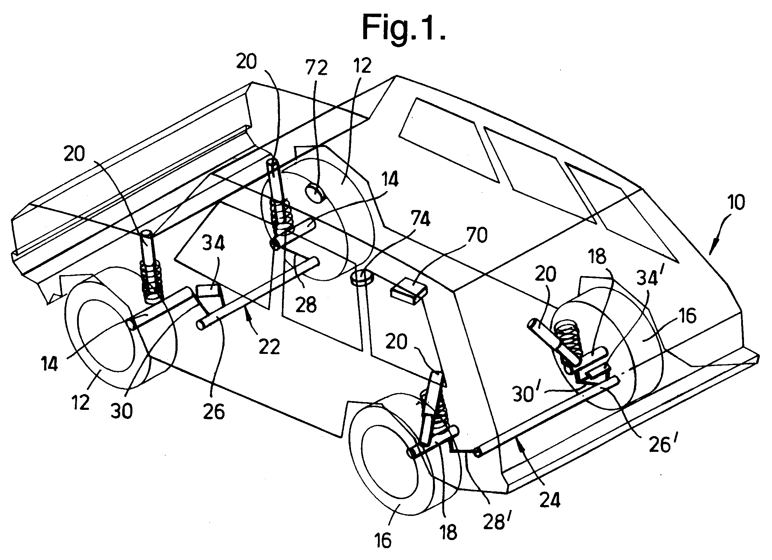

Referring to Figure 1, a vehicle 10 is shown schematically and comprises a pair of front wheels 12 each rotatably mounted on an axle 14, a pair of rear wheels 16 each rotatably mounted on an axle 18, and a shocking absorbing system 20 associated with each wheel. A portion 22 of a vehicle roll control system in accordance with the present invention is associated with the front wheels 12, and a portion 24 of the vehicle roll control system in accordance with the present invention is associated with the rear wheels 16. The portions 22, 24 are substantially the same but with modifications made solely to allow fitting to the vehicle 10.

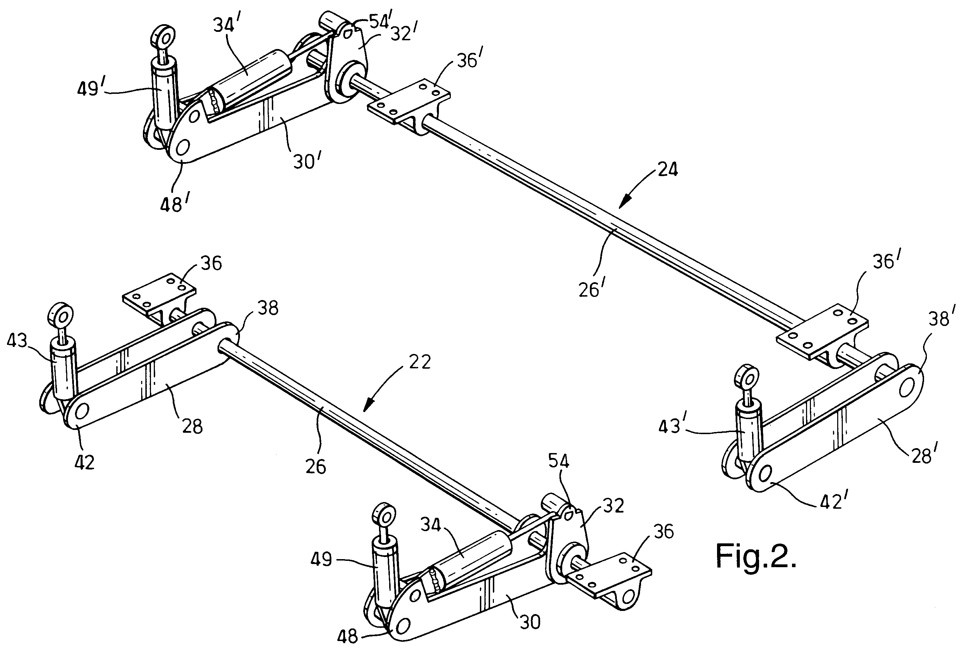

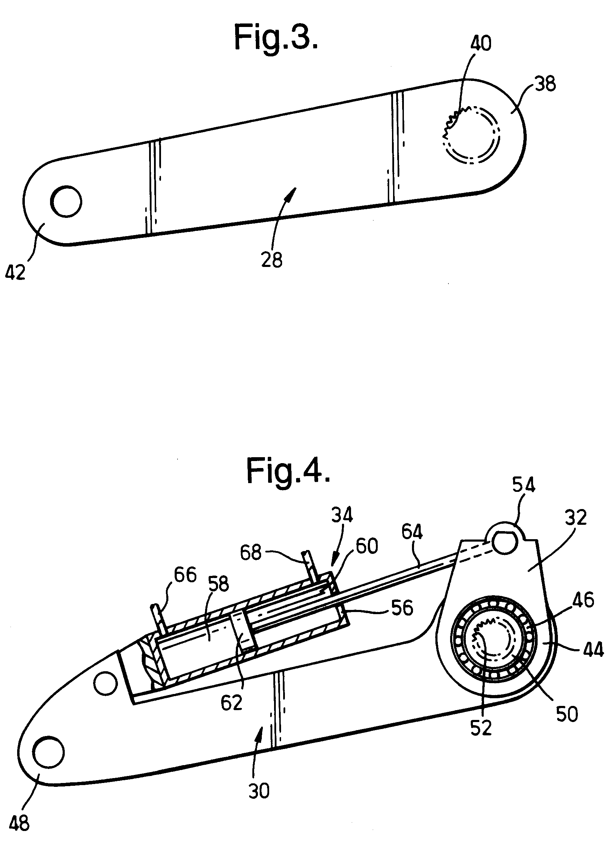

Referring in more detail to Figures 2 to 5, the portion 22 of the vehicle roll control system for the front of the vehicle comprises a torsion bar 26, a first arm 28, a second arm 30, a lever arm 32, and a hydraulic actuator 34. The torsion bar 26 is mounted on the vehicle by a pair of resilient mounts 36 in conventional manner to extend longitudinally between the wheels 12. The first arm 28 (Figure 3) is fixed at one end 38 by a splined connection 40 to the torsion bar 26. The other end 42 of the first arm 28 is connected to the axle 14 of one of the front wheels 12 by a tie rod 43. The second arm 30 (Figure 4) is rotatably mounted at one end 44 on the torsion bar 26 by way of a bearing 46. The other end 48 of the second arm 30 is connected to the axle 14 of the other front wheel 12 by a tie rod 49. The first and second arms 28,30 extend substantially parallel to one another when the vehicle is stationary, and substantially perpendicular to the torsion bar 26.

The lever arm 32 (Figure 4) is fixed at one end 50 to the torsion bar 26 by a splined connection 52 substantially adjacent the one end 44 of the second arm 30 and the bearing 46. The lever arm 32 extends substantially perpendicular to the torsion bar 26 to a free end 54. The hydraulic actuator 34 (Figure 4) extends between, and is connected to, the free end 54 of the lever arm 32 and the other end 48 of the second arm 30. The hydraulic actuator 34 comprises a housing 56 which defines a pair of fluid chambers 58,60 separated by a piston 62 which makes a sealing sliding fit with the housing. As shown in Figure 4, the housing 56 is connected to the other end 48 of the second arm 30, and the piston 62 is connected to the free end 54 of the lever arm 34 by a piston rod 64. It will be appreciated that these connections may be reversed. The fluid chambers 58,60 receive hydraulic fluid by way of fluid lines 66, 68 respectively. The portion 24 of the vehicle roll control for the rear of the vehicle is substantial the same, but with the components (which are primed) having a different layout.

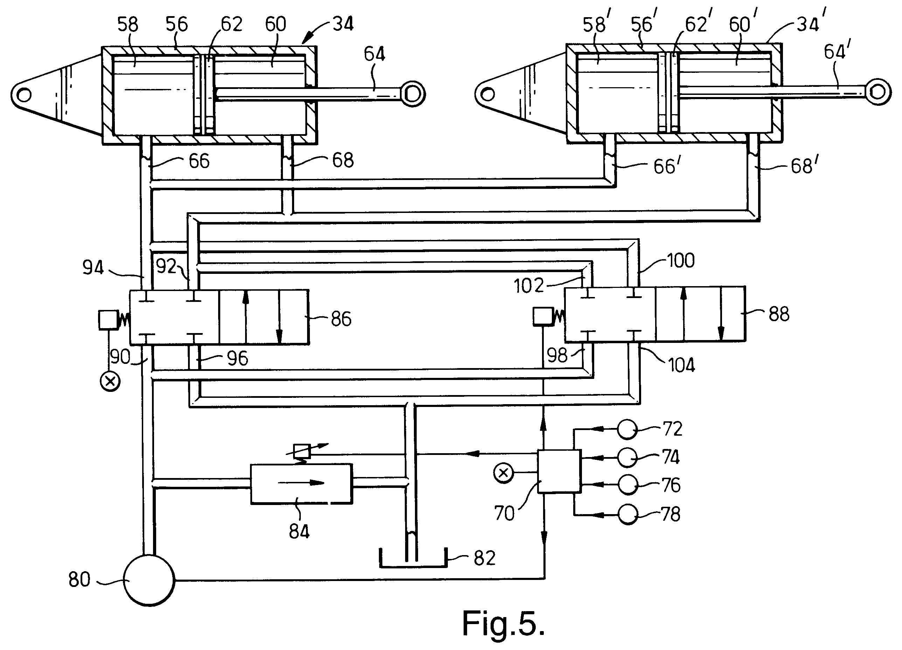

The hydraulic and electrical control circuit of the vehicle roll control system is shown in Figure 5. The hydraulic circuit includes a fluid pump 80 and a fluid reservoir 82. A proportional relief valve 84 controls flow of a fluid from the pump 80 to the reservoir 82. Connected between the pump 80 and each hydraulic actuator 34, 34' is a pair of solenoid actuated directional valves 86, 88. First directional valve 86 has first and second inputs 90, 92 and first and second outputs 94, 96. Similar, second directional valve 88 has first and second inputs 98, 100 and first and second outputs 102, 104. Each first input 90, 98 receives hydraulic fluid from the pump 80. The first output 94 of the first directional valve 86 is connected to the second input 100 of the second directional valve 88 and to the fluid line 66, 66' connected to each hydraulic actuator 34, 34'. The second input 92 of the first directional valve 86 is connected to the first output 102 of the second directional valve 88 and to the fluid lines 68, 68' connected to each hydraulic actuator 34, 34'. Each second output 96, 104 is connected to the reservoir 82. The directional valve 86 is operable to open or close a fluid path between the first input 90 and the first output 94 and between the second input 92 and the second output 96. The directional valve 88 is similarly operable. The proportional relief valve 84 is electrically operable to provide a variable sized orifice in a fluid path therethrough in order to control the fluid pressure in the hydraulic circuit. With the proportional relief valve 84 fully open, fluid is pumped directly to the reservoir 82 with little or no pressure build up in the fluid chambers 56, 58, 56', 58' of each hydraulic actuator 34, 34'. As the proportional relief valve 84 closes, the pressure in the remainder of the hydraulic circuit increases. The setting of the proportional relief valve 84 thereby determines the fluid pressure in the hydraulic circuit.

The electrical control circuit includes an electronic and/or computerised control module 70. The control module 70 operates the fluid pump 80 when required. The operation of the valves 84-88 is also controlled by the control module 70. The control module 70 operates the valves 84-88 dependent on predetermined vehicle conditions which are determined by signals from a pressure sensor 76 (which detects the presence of fluid pressure in the hydraulic circuit) and a lateral g sensor 74 (which monitors the sideways acceleration of the vehicle). The control module 70 may also take into account signals received from a steering sensor 72 (which monitors the steering angle of the front wheels 12) and/or a vehicle speed sensor 78 and/or any other relevant parameter to determine the required state of operation of the valves 84-88. The control module 70 also sets the level of current required to operate the proportional relief valve 84 to provide the required pressure in the hydraulic circuit.

If the control module 70 detects that roll control is not required (that is, the vehicle is travelling in a straight line), the control module sends a signal to the valves 84-88 to open the valves. Fluid can freely flow through the hydraulic system including between the two fluid chambers 58,60, 58', 60', of each hydraulic actuator 34, 34' allowing free movement of the piston 62, 62' relative to the housing 56, 56' thereby allowing free rotation of each second arm 30, 30' relative to its associated torsion bar 26, 26'.

If the control module 70 detects that roll control is required due to cornering of the motor vehicle 10, the control module sends a signal to close one of the directional valves and to open the other directional valve. The choice is dependent on which direction the vehicle is turning. In the case where directional valve 86 is open and directional valve 88 is closed, fluid pressure in chambers 58, 58' of the hydraulic actuators 34, 34' increases, and fluid pressure in chambers 60, 60' is relieved to the reservoir 82. In the case where directional valve 86 is closed and directional valve 88 is open, fluid pressure in chambers 60, 60' increases and fluid pressure in chambers 58, 58' is relieved. Substantially simultaneously, the control module 70 adjusts the current to the proportional relief valve 84 to close the valve a predetermined amount in order to provide the determined fluid pressure to the chambers 58, 58' or to the chambers 60, 60'. The difference in fluid pressure between the chambers 58, 58' and 60, 60' of each hydraulic actuator 34, 34' causes each piston 62, 62' to move in a controlled manner relative to its associated housing 60, 60' to control the rotation of each second arm 30, 30' relative to its associated torsion bar, to thereby provide active roll control for the vehicle 10.

If a failure in the hydraulic circuit is detected by the pressure sensor 76, both directional valves 86, 88 are closed to lock each piston 62, 62' relative to its associated housing 60, 60', and the proportional relief valve 84 is fully opened. In a preferred arrangement, the proportional relief valve 84 is biased to a normally fully open position, and the directional valves 86, 88 are biased to a normally closed position. With this arrangement, if a failure occurs in the electrical control circuit, the valves 84-88 maintain the same position as when a hydraulic failure is detected. In either of these failure modes, non-active roll control is provided for the vehicle 10.

In comparison to GB-A-2284184, the hydraulic actuators are powered (as opposed to locked) to provide active roll control for the vehicle 10.

In the preferred arrangement described above, a hydraulic actuator is provided for both the front of the vehicle and the rear of the vehicle, and these hydraulic actuators are controlled in unison. It will be appreciated that the hydraulic actuators may be controlled individually, and in certain cases the portion of the roll control system at the rear of the vehicle may be omitted.

## Claims

1. A vehicle roll control system (22,24) for a vehicle (10) having a pair of wheels (12,16) each rotatable on an axle (14,18), comprising a torsion bar (26); a first arm (28) extending substantially perpendicular to the torsion bar, the first arm being fixed to the torsion bar at one end (38) and being connectable to one of the axles at the other end (42); a second arm (30) extending substantially perpendicular to the torsion bar, the second arm being rotatably mounted on the torsion bar at one end (44) and being connectable to the other axle at the other end (48); and rotation control means (32,34) connected to the torsion bar and to the second arm between its ends, the rotation control means being actuable on detection of a predetermined vehicle condition to variably control the rotation of the second arm relative to the torsion bar.

2. A vehicle roll control system as claimed in claim 1, wherein the rotation control means (32,34) comprises a hydraulic circuit including a pair of fluid chambers (58,60) separated by a piston (62) connected between the torsion bar (26) and the second arm (30) between its ends; a fluid pressure source (80) providing pressurised fluid to the fluid chambers; and valve means (86,88) controlling the pressure differential between the two fluid chambers to control the rotation of the second arm relative to the torsion bar.

3. A vehicle roll control system as claimed in claim 2, wherein the rotation control means (32,34) further comprises a lever arm (32) extending substantially perpendicular to the torsion bar (26), the lever arm being fixed to the torsion bar at one end (50) adjacent said one end of the second arm, and having a free end (54) at the other end thereof; and a hydraulic actuator (34) extending between the second arm (30) and the lever arm, and comprising a housing (56) connected to either the second arm or to the free end of the lever arm and defining the pair of fluid chambers (58,60) separated by the piston (62), the piston being connected to the other of the second arm or the free end of the lever arm; the valve means (86,88) being operable on detection of the predetermined condition to increase the pressure in one fluid chamber relative to the other fluid chamber to move the piston relative to the housing to control the rotation of the second arm relative to the torsion bar.

4. A vehicle roll control system as claimed in claim 2, wherein the rotation control means further comprises a lever arm extending substantially perpendicular to the torsion bar, the lever arm being fixed at one end to the said other end of the second arm, and having a free end at the other end thereof; and a hydraulic actuator extending between the torsion bar and the lever arm, and comprising a housing connected to either the torsion bar or to the free end of the lever arm and defining the pair of fluid chambers separated by the piston, the piston being connected to the other of the torsion bar or the free end of the lever arm; the valve means being operable on detection of the predetermined condition to increase the pressure in one fluid chamber relative to the other fluid chamber to move the piston relative to the housing to control the rotation of the second arm relative to the torsion bar.

5. A vehicle roll control system as claimed in any one of claims 2 to 4, wherein the valve means (86,88) comprises reversible fluid path means which provides a fluid path for pressurised fluid to one fluid chamber (58,60) and a fluid path for relief of fluid pressure from the other fluid chamber (58,60), or vice versa; and a fluid pressure control valve (84).

6. A vehicle roll control system as claimed in claim 5, wherein the reversible fluid path means comprises a pair of directional valves (86,88) which are operational during actuation of the roll control means such that one directional valve is closed whilst the other directional valve is open.

7. A vehicle roll control system as claimed in claim 5 or claim 6, wherein the fluid pressure control valve is a proportional valve (84) having a fluid path therethrough which has a variable orifice.

8. A vehicle roll control system as claimed in any one of claims 2 to 7, wherein the valve means (86,88) is operated by an electronic control module (70) which receives signals dependent on the predetermined vehicle condition.

9. A vehicle roll control system as claimed in any one of claims 1 to 8, wherein the predetermined vehicle condition is a predetermined sideways acceleration of the vehicle.
